# EUROPÄISCHE PATENTANMELDUNG

(11) **EP 2 109 244 A1**
(43) Veröffentlichungstag der Anmeldung: **14.10.2009**
(21) Anmeldenummer: 08007059.2
(22) Anmeldetag: 09.04.2008
(51) Int. Cl.: H04L 1/00

(54) **Verfahren zur sicherheitsgerichteten Übertragung Sicherheitsschaltgerät und Kontrolleinheit**

(71) Anmelder: SIEMENS AKTIENGESELLSCHAFT, 80333 München (DE)
(72) Erfinder: Barthel, Herbert, 91074 Herzogenaurach (DE); Stripf, Wolfgang, Dr., 76187 Karlsruhe (DE)

(57) **Zusammenfassung**

Bei einen Verfahren zur sicherheitsgerichteten Übertragung einer Information (22) zwischen einem Sender (1) und einen Empfänger (2), wobei zumindest zwei die Information (22) betreffende Telegramme (20, 21) als ein erstes Telegramm (20) über einen ersten Kanal und ein zweites Telegramm (21) über einen zweiten Kanal vom Sender (1) zum Empfänger (2) übertragen werden, wird die Übertragungssicherheit erhöht und eine Restfehlerwahrscheinlichkeit reduziert dadurch, dass für das zweite Telegramm (21) zur Erkennung eines sich während der Übertragung auf die Information (22) auswirkenden Fehlers eine erste Kennzeichnung (23, 31) zumindest aus einer ersten Teilmenge des ersten Telegramms (20) generiert wird, welche beim Empfänger (2) zur Identifizierung der im ersten Telegramm (20) enthaltenen Information (22) verwendet wird. Dieses Verfahren findet Einsatz bei der Kommunikation von einem Sicherheitsschaltgerät (11) zu einer Kontrolleinheit (10).

## Beschreibung

Die Erfindung betrifft ein Verfahren zur sicherheitsgerichteten Übertragung einer Information zwischen einem Sender und einem Empfänger, wobei zumindest zwei die Information betreffende Telegramme als ein erstes Telegramm über einen ersten Kanal und ein zweites Telegramm über einen zweiten Kanal vom Sender zum Empfänger übertragen werden. Des Weiteren betrifft die Erfindung ein Verfahren zum Betrieb eines Sicherheitsschaltgerätes an einer Kontrolleinheit. Die Erfindung betrifft auch ein Sicherheitsschaltgerät geeignet für eine sicherheitsgerichtete Übertragung einer Information zu einer Kontrolleinheit und umgekehrt, mit einer ersten Datenleitung für einen ersten Kanal und einer zweiten Datenleitung für einen zweiten Kanal, mit ersten Mitteln zum Senden/Empfangen eines die Information betreffenden ersten Telegramms auf den ersten Kanal und eines zweiten Telegramms auf dem zweiten Kanal. Als Gegenstück zu dem Sicherheitsschaltgerät betrifft die Erfindung eine Kontrolleinheit geeignet für eine sicherheitsgerichtete Übertragung einer Information zu einem Sicherheitsschaltgerät und umgekehrt, mit einer ersten Datenleitung für einen ersten Kanal und einer zweiten Datenleitung für einen zweiten Kanal, mit dritten Mitteln zum Senden/Empfangen eines die Information betreffenden ersten Telegramms auf dem ersten Kanal und eines zweiten Telegramms auf dem zweiten Kanal.

Für eine sichere Feldbuskommunikation beispielsweise in der Prozessautomatisierung werden Sicherheitsschaltgeräte wie sicherheitsgerichtete Sensoren mit den Funktionen eines Lichtgitters, eines Laserscanners, eines Zweihandtasters, einer Trittmatte, usw. eingesetzt.

Nach dem Stand der Technik werden bei sicherheitsgerichteten Systemen bzw. bei der sicherheitsgerichteten Übertragung von Daten eines Sicherheitsschaltgerätes an eine übergeordnete Kontrolleinheit nach der IEC 61 784-3 Annex A, Model B und C Telegramme mit Sicherungsanhang doppelt gesendet. Da hier der Informationsgehalt redundant in zwei Telegrammen auf zwei unterschiedlichen Datenkanälen oder zeitlich verschoben hintereinander auf einem Datenkanal zum Empfänger bzw. zu der Kontrolleinheit übermittelt werden, hat dieses Übertragungsverfahren den Nachteil einer geringeren Fehleraufdeckung im Verhältnis zum Datenaufkommen.

Es sind also weitergehende Maßnahmen erforderlich, um gestörte Daten zu erkennen. Erreicht könnte dies mittels einer CRC-Checksumme werden. Je länger diese Checksumme ist, desto höher ist Fehleraufdeckung. Eine lange Checksumme verlängert jedoch das Telegramm, so dass die Reaktionszeiten des Steuerungssystems verschlechtert würden.

Auch bei einer Lösung nach dem CAN-Bus (Can open Safety) wird die Übertragung der sicherheitsgerichteten Informationen doppelt ausgeführt (entsprechend Model C).

Es wird die Information also redundant auf zwei Datenleitungen zum Empfänger geschickt. Aufgabe der Erfindung ist es ein Verfahren mit einer erhöhten Datensicherheit bei einer sicherheitsgerichteten Übertragung einer Information zwischen einen Sender und einem Empfänger bereitzustellen.

Die Aufgabe wird bei dem eingangs genannten Verfahren dadurch gelöst, dass für das zweite Telegramm zur Erkennung eines sich während der Übertragung auf die Information auswirkenden Fehlers eine erste Kennzeichnung zumindest aus einer ersten Teilmenge des ersten Telegramms generiert wird, welche beim Empfänger zur Ermittlung der Integrität der im ersten Telegramm enthaltenen Information verwendet wird. Erfindungsgemäß werden jetzt also nicht, wie bei dem Stand der Technik, die zu sichernden Daten auf einer getrennten Datenleitung noch mal übertragen, sondern es wird eine erste Kennzeichnung generiert, ein sogenannter Hash-Wert von den zu sichernden Daten wird über die zweite Datenleitung übertragen. Vorteilhaft hieran ist, dass ohne Erhöhung des Datenaufkommens pro Kanal bzw. pro Leitung eine ausreichend hohe Datensicherheit erreicht wird. Weiterhin kann durch dieses Verfahren auf vorteilhafte Weise die Anforderung an eine kurze Reaktionszeit einer Telegrammantwort vom Sender zum Empfänger und umgekehrt eingehalten werden. Diese Vorteile machen sich insbesondere bei kleinen Datenmengen, z.B. 16 Bit-Information, und niedrigen Baudraten (kleiner als ein MBaud) bemerkbar.

In einer vorteilhaften Ausgestaltung wird für das zweite Telegramm eine zweite Kennzeichnung aus einer von der ersten Teilmenge verschiedenen zweiten Teilmenge des ersten Telegramms generiert. Bei den Kennzeichnungen handelt es sich üblicherweise um CRC-Werte. CRC steht als Abkürzung für Cyclic Redundancy Check. Die zyklische Redundanzprüfung ist ein Verfahren aus der Informationstechnik zur Bestimmung eines Prüfwertes für Daten, um Fehler bei der Übertragung von Daten erkennen zu können. Durch die Generierung der zweiten Kennzeichnung, also eines weiteren CRC-Prüfwertes im zweiten Telegramm wird die Datensicherheit nochmals um ein weiteres erhöht. Der CRC-Prüfwert wird also zur Überprüfung auf Fehlerfreiheit verlängert.

Für eine vereinfachte und schnellere Zuordnung der Telegramme beim Empfänger ist es vorteilhaft, wenn für das zweite Telegramm eine fortlaufende Nummer generiert wird. Die Zuordnung wird um ein weiteres vereinfacht wenn die fortlaufende Nummer zusätzlich für das erste Telegramm generiert wird zur Zuordnung der Telegramme beim Empfänger.

Vorzugsweise wird das zuvor genannte Verfahren zum Betrieb eines Sicherheitsschaltgerätes an einer Kontrolleinheit eingesetzt, wobei für eine Kommunikation der Kontrolleinheit mit dem Sicherheitsschaltgerät und umgekehrt eine erste Datenleitung für den ersten Kanal und eine zweite Datenleitung für den zweiten Kanal verwendet wird. Bei den Sicherheitsschaltgeräten nach dem Stand der Technik werden diese Sicherheitsschaltgeräte über drei Leitungen angeschlossen, einer Datenleitung C/Q, einer ersten Versorgungsspannungsleitung und einer zweiten Versorgungsspannungsleitung. Um das erfindungsgemäße Verfahren bei den Sicherheitsschaltgeräten auf vorteilhafte Weise einzusetzen, wird ein zuvor nicht belegter Pin für die Realisierung der zweiten Datenleitung verwendet.

Vorzugsweise kann Dank der Erfindung bei dem Betrieb eines Sicherheitsschaltgerätes an einer Kontrolleinheit nun die erste und die zweite Datenleitung als eine ungeschirmte Datenleitung verwendet werden. Bei stochastischen (d.h. zufälligen) Übertragungsfehlern z.B. durch EMV-Einflüsse auf die Datenleitungen, können diese Fehler durch das erfindungsgemäße Verfahren erkannt und beherrscht werden. Insbesondere bei ungeschirmten Datenleitungen ist die Wahrscheinlichkeit eines Fehlers durch EMV-Störungen sehr hoch. Durch das Datenübertragungsverfahren können nun aber trotz möglicher EMV-Störeinflüsse dennoch ungeschirmte Kabel für die Verlegung beispielsweise in der Prozessautomatisierungsindustrie verwendet werden. Dies ist von besonderem Vorteil, da diese ungeschirmten Datenleitungen wesentlich kostengünstiger als geschirmte Datenleitungen sind. Ein weiterer Vorteil ist die Nutzung der vorhandenen Installation die üblicherweise mit ungeschirmten Kabeln/Datenleitungen ausgestattet ist.

Bei dem eingangs erwähnten Sicherheitsschaltgerät wird die Aufgabe dadurch gelöst, dass es zweite Mittel zur Generierung einer ersten Kennzeichnung zumindest aus einer ersten Teilmenge des ersten Telegramms für das zweite Telegramm zur Erkennung eines sich während der Übertragung auf die Information auswirkenden Fehlers aufweist. Derartige zweite Mittel könnten neben den ersten Mitteln welche durch beispielsweise ein Kommunikationsbaustein ausgestaltet sind durch einen anwendungsspezifischen Kodierbaustein beispielsweise eines freiprogrammierbaren ASIC's ausgestaltet sein.

Weiterhin ist es vorteilhaft, wenn die zweiten Mittel für das Generieren einer zweiten Kennzeichnung für das zweite Telegramm aus einer von der ersten Teilmenge verschiedenen zweiten Teilmenge des ersten Telegramms ausgestaltet sind.

Auch bei der eingangs genannten Kontrolleinheit, welche üblicherweise das Gegenstück zu dem Sicherheitsschaltgerät bildet, wird die eingangs genannte Aufgabe dadurch gelöst, dass bei der Kontrolleinheit vierte Mittel zur Generierung einer ersten Kennzeichnung zumindest aus einer ersten Teilmenge des ersten Telegramms für das zweite Telegramm zur Erkennung eines sich während der Übertragung auf die Information auswirkenden Fehlers vorhanden sind.

Zur Erhöhung der Datensicherheit sind auch bei der Kontrolleinheit die vierten Mittel derart ausgestaltet, dass sie das Generieren einer zweiten Kennzeichnung aus einer von der ersten Teilmenge verschiedenen zweiten Teilmenge des ersten Telegramms ermöglichen.

Für den Fall, dass die Kennzeichnung der Information länger ist als die Information ist es vorteilhaft, einen Teil der Kennzeichnung im ersten Telegramm und den restlichen Teil der Kennzeichnung im zweiten Telegramm unterzubringen, so dass beide Telegramme die gleiche Länge aufweisen.

Die Zeichnungen zeigen mehrere Ausführungsbeispiele für das Verfahren zur sicherheitsgerichteten Übertragung einer Information zwischen einem Sender und einem Empfänger, dabei ist in
- FIG 1: eine Kontrolleinheit mit einem Sicherheitsschaltgerät,
- FIG 2 bis 5: jeweils ein erstes und ein zweites Telegramm mit unterschiedlichem Telegrammaufbau und in
- FIG 6: ein Vergleich einer Restfehlerwahrscheinlichkeit bei zwei unterschiedlichen Übertragungsverfahren dargestellt.

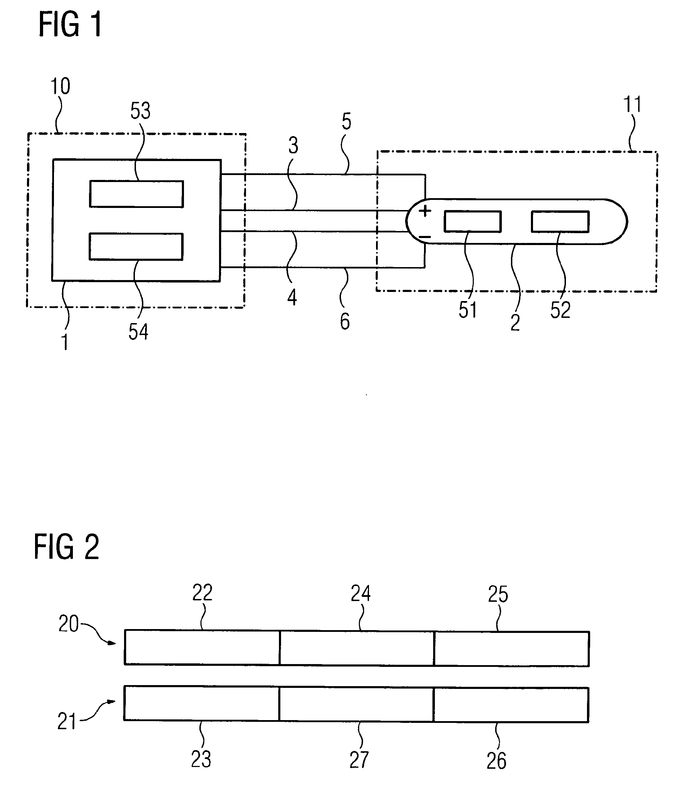

Gemäß FIG 1 ist ein an eine Kontrolleinheit 10 angeschlossenes Sicherheitsschaltgerät 11 dargestellt. Die Kontrolleinheit 10 weist im Wesentlichen einen Sender 1 auf. Es ist dabei nicht einschränkend, das dieser Sender 1 nur die Funktion zum Senden enthält, er kann ebenfalls in die Funktionsweise Empfangen wechseln. Für den Fall, dass die Kontrolleinheit 10 mit ihrem Sender 1 in der Funktionsweise Senden arbeitet ist in dem Sicherheitsschaltgerät 11 ein Empfänger 2 dazu bereit, die gesendeten Informationen des Senders 1 in der Kontrolleinheit 10 zu empfangen. Der Sender 1 ist über vier Leitungen/ Drähte mit dem Empfänger 2 verbunden. Eine erste Leitung 3 (die zusammen mit der Leitung 6 eine Datenleitung bildet), und eine zweite Leitung 4 (die zusammen mit Leitung 6 eine zweite Datenleitung bildet) ermöglichen die Kommunikation zwischen dem Sender 1 und dem Empfänger 2. Über Versorgungsspannnungsleitungen 5, 6 wird das Sicherheitsschaltgerät 11 mit einer Betriebsspannung versorgt. Die Kontrolleinheit 10 ist zum Senden und Empfangen von Informationen mit einem dritten Mittel 53 ausgestaltet. Dieses dritte Mittel 53 ermöglicht es ein erstes Telegramm 20 und ein zweites Telegramm 21, siehe hierzu FIG 1 bis FIG 5, zu dem Sicherheitsschaltgerät 11 zu senden. Dabei weist die Kontrolleinheit 10 zusätzlich zu den dritten Mitteln 53 ein viertes Mittel 54 zur Generierung einer ersten Kennzeichnung zumindest aus einer ersten Teilmenge des ersten Telegramms 20 auf. Diese erste Kennzeichnung wird zur Identifizierung der im ersten Telegramm 20 enthaltenen Informationen 22 beim Empfänger 2 bzw. in dem Sicherheitsschaltgerät 11 verwendet. Vorzugsweise werden bei dieser sogenannten Punkt-zu-Punkt-Übertragung besonders angepasste Telegrammrahmen bzw. ein angepasster Telegrammaufbau verwendet. Durch eine optimierte Verteilung von CRC-Sicherungskennzeichnungen, vorzugsweise im zweiten Telegramm 21 kann eine Hammingdistanz auf 10 erhöht werden, d.h. alle denkbaren möglichen 9-Bit-Fehler werden mit dieser Art der sicherheitsgerichteten Übertragung entdeckt. Weiterhin ist es denkbar, dass beispielsweise bei digitalen Sensoren welche, auf kapazitiven, magnetischen, transformatorischen, sonoren und anderen Effekten beruhen, nicht nur beispielsweise digitale Schaltsignale oder Statussignale zwischen der Kontrolleinheit 10 und dem Sicherheitsschaltgerät 11 ausgetauscht werden, sondern auch eventuell benötigte sichere Parameterdaten für das Sicherheitsschaltgerät 11. Auch wäre es möglich über die Kontrolleinheit 10 Diagnosedaten von dem Sicherheitsschaltgerät 11 abzurufen. Bei einem ersten Hochlauf des Sicherheitsschaltgerätes 11 könnten auch Parametriertelegramme an das Sicherheitsschaltgerät 11 über die Datenleitungen 3 und 4 gesendet werden. Für weitere Kommunikationsmöglichkeiten bietet eine Erweiterung einer beispielsweise OSSD-Schnittstelle (OSSD = Output Signal Switching Device, hier Sicherheitsschaltausgang, d.h. der Teil der berührungslos wirkenden Schutzeinrichtung, der mit der Maschinensteuerung verbunden ist und der in den AUS-Zustand übergeht, wenn der Sensorteil während des bestimmungsgemäßen Betriebes anspricht)auch die Möglichkeit multiple Abschaltsignale oder Messwerte aus einem Sicherheitsschaltgerät 11 zu liefern. Es wäre damit möglich über den Anwendungsbereich der OSSD-Schnittstelle für Sicherheitsschaltgeräte ein kombiniertes Sensor/Aktor-Gerät mit integrierter Sicherheit zu realisieren.

Gegenüber herkömmlichen Schnittstellen zur sicheren Feldbuskommunikation zeigt diese neue Technologie folgende Vorteile:
- Einfache und kompatible Schnittstellenerweiterung gemäß IEC 61131/2,
- eine lineare Erweiterung bestehender Remote-I/O-Baugruppen,
- Punkt-zu-Punkt-Kommunikation,
- keine Feldbusabhängigkeit,
- getrennte Stromversorgung für sichere Aktuatorik,
- Einsatz von Standard-Mikrocontrollern und
- keine Erweiterung eines Typenspektrums.

Das erfindungsgemäße sicherheitsgerichtete Datenübertragungsverfahren lässt es mit Vorteil zu ungeschirmte, unverdrillte Kabelverbindungen zwischen der Kontrolleinheit 10 und des Sicherheitsschaltgerätes 11 zu verwenden. Eine weiterführende nicht dargestellte Ausgestaltung ist ein über ein Fieldbus angeschlossenes Gate I/O-Linkmodul, welches ein Master für eine Mehrzahl von Sicherheitsschaltgeräten bildet. Der Master weist dann z.B. ein I/O-Linkinterface mit 1-n Anschlüssen auf. An diese 1-n Anschlüsse sind 1-n Sicherheitsschaltgeräte angeschlossen, welche als Slaves parametriert sind.

Gemäß FIG 2 ist ein erstes Telegramm 20 und ein zweites Telegramm 21 dargestellt. Im Vergleich zum Stand der Technik, bei welchem das erste Telegramm 20 und das zweite Telegramm 21 die identischen Informationen nur in redundanter Form enthalten, weist jetzt das zweite Telegramm 21 ein vom ersten Telegramm 20 unterschiedlichen Informationsgehalt auf. Von links nach rechts gelesen weist das erste Telegramm 20 eine Information 22, ein Statusfeld 24 und eine Prüfsumme 25 auf. Die Information 22 stellt eine 16 Bit-Dateninformation dar, der Status 24 ist als 2 Bit-Status ausgelegt und die Prüfsumme 25 ist eine 6 Bit-Prüfsumme. Auch in der Lesart von links nach rechts zeigt das zweite Telegramm 21 nun anfänglich eine erste Kennzeichnung 23 gefolgt von einer 2 Bit breiten fortlaufenden Nummer 27 mit einer anschließenden Prüfsumme 26. Durch die Erzeugung einer ersten Kennzeichnung 23 welche in diesem Fall als ein CRC-16 Wert der durch eine Polynomdivision der Information durch das CRC 16-Polymon errechnet wurde, z.B. dem 139B7-Polynom ausgeführt ist, wird die Datensicherheit erhöht. Diese erste Kennzeichnung 23 welche als ein Hash-Wert erzeugt wurde, sorgt für eine Diversität zwischen dem ersten Telegramm 20 und dem zweiten Telegramm 21. Da diese Telegramme 20, 21 auf unterschiedlichen Kanälen übertragen werden, ist ein mit diesen Verfahren betriebenes System ein zweikanaliges diversitäres System. Unter Diversität versteht man eine Strategie zur Beherrschung von Fehlern gemeinsamer Ursache. Dabei werden Systeme redundant ausgelegt, allerdings werden bewusst verschiedene Realisierungen und keine baugleichen Einzelsysteme verwendet. Hinter dieser Vorgehensweise steht die Idee, dass Systeme, die das gleiche leisten, aber unterschiedlich realisiert sind, gegen gleiche Störungen unempfindlich sind und daher nicht gleichzeitig ausfallen.

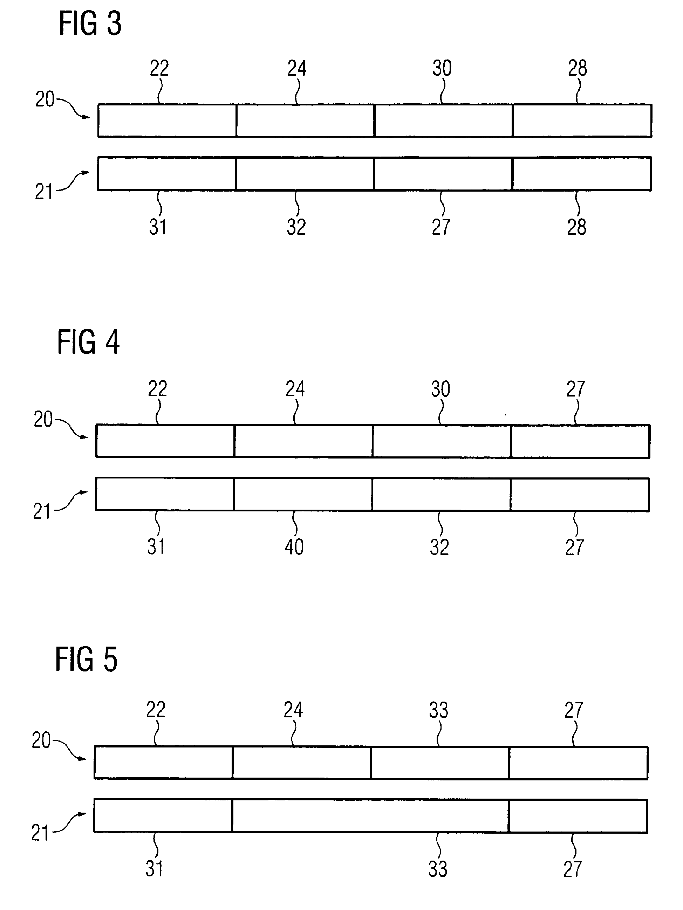

Gemäß FIG 3 enthält der Telegrammaufbau des ersten Telegramms 20 und des zweiten Telegramms 21 einen auf die beiden Telegramme 21, 22 verteilten 24 Bit langen CRC-Prüfwert. Der 24 Bit lange CRC24-Prüfwert teilt sich folgendermaßen auf:

CRC24 (Bit 21-24) mit dem Bezugszeichen 30, CRC24 (Bit 0-15) mit dem Bezugszeichen 31. CRC24 (Bit 16-20) mit dem Bezugszeichen 32. Der 24 Bit lange CRC24-Prüfwert ist nun auf das erste Telegramm 20 und das zweite Telegramm 21 aufgeteilt. Die Aufteilung auf die beiden Telegramme hat den Vorteil, dass nun die Fehlersicherheit erhöht ist, dass Datenaufkommen aber nicht. Zwischen den 16 Bit Nutzdaten mit dem Bezugszeichen 22 und den 4 Bit Anteil des CRC24-Prüfwertes mit dem Bezugszeichen 30 befindet sich eine 2 Bit Statusinformation mit dem Bezugszeichen 24. Das erste Telegramm 20 wird abgeschlossen mit einer 2 Bit Paddinginformation 28. Das zweite Telegramm 21 enthält in seinem Aufbau neben den CRC24-Prüfwerten eine fortlaufende Nummer 27 und wiederum zwei Padding Bits 28.

Eine weitere Alternative des Telegrammaufbaus für das erste Telegramm 20 und das zweite Telegramm 21 zeigt FIG 4. Im ersten Telegramm 20 sind wiederum von links nach rechts gelesen 16 Bit Daten als Information 22 hinterlegt, zwei Status Bits 24, gehen einem Anteil an einem 24 Bit langen CRC24-Prüfwert voraus. Dieser Anteil umfasst die Bits 21-24 des 24 Bit langen CRC24-Prüfwertes und ist mit dem Bezugszeichen 30 beziffert. Das erste Telegramm 20 wird mit einer 2 Bit breiten fortlaufenden Nummer 27 abgeschlossen. Das zweite Telegramm 21 weist mit dem Bezugszeichen 31 einen weiteren Anteil des 24 Bit langen CRC24-Prüfwertes auf. Dieser Anteil umfasst die Bits 0-15 des CRC24-Prüfwertes und ist mit dem Bezugszeichen 31 beziffert. Es folgen 2 Bits freie Informationen 40. Diesen Freibits folgt ein weiterer Anteil des CRC24-Prüfwertes, nämlich die Bits 16-20, CRC24 (Bits 16-20) mit dem Bezugszeichen 32. Das zweite Telegramm 21 wird wiederum mit einer 2 Bit breiten fortlaufenden Nummer 27 abgeschlossen.

Eine weitere Alternative des Telegrammaufbaus, wobei die zur Verfügung stehenden Bits optimal genutzt werden, ist gemäß FIG 5 dargestellt. In dem ersten Telegramm 20 schließen sich an die 16 Bit breite Information 22, zwei Statusbits 24 an. Als Besonderheit folgt jetzt ein Anteil von einem 26 Bit langen CRC24-Prüfwert. Dieser Anteil CRC24 (Bit 23-26) ist mit dem Bezugszeichen 33 ausgewiesen. Diesem Anteil CRC24 (Bit 23-26) 33 folgt eine fortlaufende Nummer 27. Die weiteren Anteile des 26 Bit breiten CRC24-Prüfwertes befinden sich im zweiten Telegramm 21. Das zweite Telegramm 21 startet mit einem weiteren Anteil des 26 Bit langen CRC24-Prüfwertes mit den Bits 0-15 CRC24 (Bit 0-15) mit dem Bezugszeichen 31. Es folgt der letzte Anteil des 26 Bit langen CRC24-Prüfwertes CRC24 (Bit 16-22) mit dem Bezugszeichen 33. Das zweite Telegramm 21 wird abgeschlossen mit einer 2 Bit breiten fortlaufenden Nummer 27.

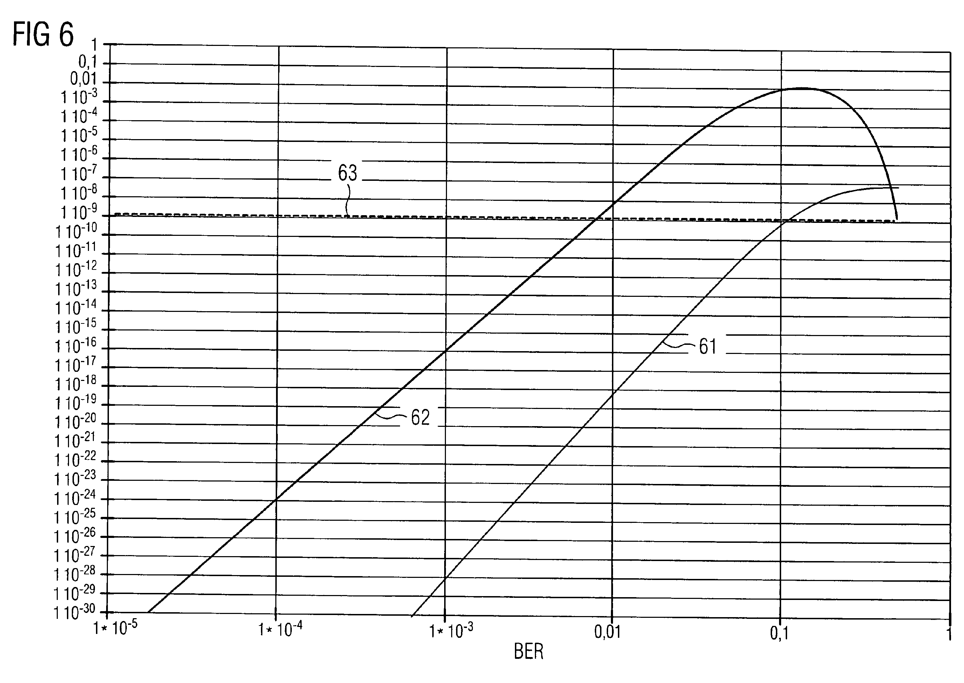

Gemäß FIG 6 ist der Verlauf einer Restfehlerwahrscheinlichkeit des erfindungsgemäßen Verfahrens zu einer Restfehlerwahrscheinlichkeit des Datenübertragungsverfahrens nach dem Stand der, bei dem auf beiden Kanälen die gleiche Information übertragen wird, dargestellt. Das Diagramm 60 zeigt mit einem ersten Kurvenverlauf 61 den Verlauf der Restfehlerwahrscheinlichkeit bei einer Datenübertragung nach der herkömmlichen Methode unter der Randbedingung gleicher Performance der beiden Methoden. Mit einem zweiten Kurvenverlauf 62 ist die verbesserte Restfehlerwahrscheinlichkeit bei dem erfindungsgemäßen sicherheitsgerichteten Datenübertragungsverfahren dargestellt. Eine Grenzlinie 63, welche bei einer Restfehlerrate von 10⁻⁹ pro Stunde liegt, darf für Sicherheits-Anforderungen nach SIL2 und SIL3 nicht überschritten werden. Das erfindungsgemäße Verfahren zeigt im Bereich einer Bit Error Rate BER von 0,01 eine Verbesserung von mehr als den Faktor 10⁷ gegenüber der herkömmlichen Lösung, welche mittels des ersten Kurvenverlaufs 61 dargestellt ist.

Zusammenfassend kann gesagt werden, über den ersten Kanal werden die Nutzdaten und ein Teil des CRC übertragen. Auf dem zweiten Kanal werden nun zeitgleich zum ersten Kanal die restlichen Anteile des CRC übertragen. Damit wird bei gleicher Telegrammdauer der Sicherungswert von 12 Bit auf 24 Bit vergrößert. Vorteil: Einhaltung der Fehlerabdeckung wie für Sicherheitsanwendungen vorgeschrieben, ohne die Reaktionszeit des Systems zu verschlechtern, und unter Beibehaltung der von der Norm vorgegebenen Übertragungsgeschwindigkeit. Außerdem ergeben sich zwei zumindest funktional voneinander unabhängige Übertragungswege -> diversität. (24 Bit CRC erreichen eine deutlich höhere Fehlerabdeckung als z.B. durch andere Maßnahmen der redundanten Telegrammübertragung möglich wären.

## Patentansprüche

1. Verfahren zur sicherheitsgerichteten Übertragung einer Information (22) zwischen einem Sender (1) und einem Empfänger (2), wobei zumindest zwei die Information (22) betreffende Telegramme (20, 21) als ein erstes Telegramm (20) über einen ersten Kanal und ein zweites Telegramm (21) über einen zweiten Kanal vom Sender (1) zum Empfänger (2) übertragen werden, **dadurch gekennzeichnet, dass** für das zweite Telegramm (21, 31) zur Erkennung eines sich während der Übertragung auf die Information (22) auswirkenden Fehlers eine erste Kennzeichnung (23) zumindest aus einer ersten Teilmenge des ersten Telegramms (20) generiert wird, welche beim Empfänger (2) zur Ermittlung der Integrität der im ersten Telegramm (20) enthaltenen Information (22) verwendet wird.

2. Verfahren nach Anspruch 1, wobei für das zweite Telegramm (21) eine zweite Kennzeichnung (32) aus einer von der ersten Teilmenge verschiedenen zweiten Teilmenge des ersten Telegramms (20) generiert wird.

3. Verfahren nach Anspruch 1 oder 2, wobei für das zweite Telegramm (21) eine fortlaufende Nummer (27) generiert wird.

4. Verfahren nach Anspruch 3, wobei die fortlaufende Nummer (27) zusätzlich für das erste Telegramm (20) generiert wird zur Zuordnung der Telegramme (20, 21) beim Empfänger.

5. Verfahren nach einem der vorhergehenden Ansprüche zum Betrieb eines Sicherheitsschaltgerätes (11) an einer Kontrolleinheit (10), wobei für eine Kommunikation der Kontrolleinheit (10) mit dem Sicherheitsschaltgerät (11) und umgekehrt eine erste Datenleitung (3) für den ersten Kanal und eine zweite Datenleitung (4) für den zweiten Kanal verwendet wird.

6. Verfahren nach Anspruch 5, wobei für die erste und die zweite Datenleitung (3, 4) ungeschirmte Datenleitungen verwendet werden.

7. Sicherheitsschaltgerät (11) geeignet für eine sicherheitsgerichtete Übertragung einer Information (22) zu einer Kontrolleinheit (10) und umgekehrt, mit einer ersten Datenleitung (3) für einen ersten Kanal und einer zweiten Datenleitung (4) für einen zweiten Kanal, mit ersten Mitteln (51) zum Senden/Empfangen eines die Information (22) betreffenden ersten Telegramms (20) auf dem ersten Kanal und eines zweiten Telegramms (21) auf dem zweiten Kanal, **gekennzeichnet durch** zweite Mittel (52) zur Generierung einer ersten Kennzeichnung (23, 31) zumindest aus einer ersten Teilmenge des ersten Telegramms (20) für das zweite Telegramm (21) zur Erkennung eines sich während der Übertragung auf die Information (22) auswirkenden Fehlers.

8. Sicherheitsschaltgerät (11) nach Anspruch 7, wobei die zweiten Mittel (52) für das Generieren einer zweiten Kennzeichnung (32) für das zweite Telegramm (22) aus einer von der ersten Teilmenge verschiedenen zweiten Teilmenge des ersten Telegramms (20) ausgestaltet sind.

9. Kontrolleinheit (10) geeignet für eine sicherheitsgerichtete Übertragung einer Information (22) zu einem Sicherheitsschaltgerät (11) und umgekehrt, mit einer ersten Datenleitung (3) für einen ersten Kanal und einer zweiten Datenleitung (4) für einen zweiten Kanal, mit dritten Mitteln (53) zum Senden/Empfangen eines die Information (22) betreffenden ersten Telegramms (20) auf dem ersten Kanal und eines zweiten Telegramms (21) auf dem zweiten Kanal, **gekennzeichnet durch** vierte Mittel (54) zur Generierung einer ersten Kennzeichnung (23, 31) zumindest aus einer ersten Teilmenge des ersten Telegramms (20) für das zweite Telegramm (21) zur Erkennung eines sich während der Übertragung auf die Information (22) auswirkenden Fehlers.

10. Kontrolleinheit (10) nach Anspruch 9, wobei die vierten Mittel (54) für das Generieren einer zweiten Kennzeichnung (32) aus einer von der ersten Teilmenge verschiedenen zweiten Teilmengen des ersten Telegramms (20) ausgestaltet sind.
